# EUROPÄISCHE PATENTSCHRIFT

(11) **EP 1 118 171 B1**
(45) Veröffentlichungstag und Bekanntmachung des Hinweises auf die Patenterteilung: **22.12.2004**
(21) Anmeldenummer: 99953674.1
(22) Anmeldetag: 01.09.1999
(51) Int. Cl.: H04B 7/005

(54) **VERFAHREN ZUR REGELUNG DER DOWNLINK-SENDELEISTUNG IN EINEM MOBILFUNKSYSTEM**
METHOD FOR REGULATING DOWNLINK TRANSMITTING POWER IN A MOBILE RADIOTELEPHONE NETWORK
PROCEDE DE REGLAGE DE LA PUISSANCE D'EMISSION DE LA LIAISON DESCENDANTE DANS UN SYSTEME RADIOMOBILE

(30) Priorität: 29.09.1998 DE 19844736
(43) Veröffentlichungstag der Anmeldung: 25.07.2001
(73) Patentinhaber: SIEMENS AKTIENGESELLSCHAFT, 80333 München (DE)
(72) Erfinder: SCHULZ, Egon, D-80993 München (DE)
(86) Internationale Anmeldenummer: PCT/DE1999/002761
(87) Internationale Veröffentlichungsnummer: WO 2000/019633

(56) Entgegenhaltungen:
- EP-A- 0 129 794
- EP-A- 0 810 743
- EP-A- 0 836 287
- WO-A-98/11677
- US-A- 5 564 080

## Beschreibung

Die Erfindung betrifft die Regelung der Sendeleistung in einem Mobilfunksystem und betrifft insbesondere die Regelung der Sendeleistung in Mobilfunksystemen mit mindestens einer Basisstation und einer Mobilfunkeinheit.

Bei bekannten Mobilfunksystemen, beispielsweise einem DECT-Mobilfunksystem, ist die selbständige Regelung der Sendeleistung der DECT-Mobilteile bekannt. Dabei regelt das Mobilteil selbständig die Sendeleistung im Uplink (Aufwärtsrichtung von der Mobilstation zur Basisstation) aufgrund der Übertragungsqualität und Empfangsfeldstärke im Downlink (Abwärtsrichtung von der Basisstation zur Mobilstation). Dabei wird die Übertragungsqualität und die Empfangsfeldstärke des verwendeten Übertragungskanals von der Mobilstation aus Meßsequenzen ermittelt, die im Downlink mitübertragen werden. Reduziert oder erhöht das Mobilteil die Sendeleistung so wird allerdings die Basisstation vom Mobilteil von der Reduzierung bzw. Erhöhung darüber nicht informiert. Es findet daher nur eine Sendeleistungsregelung im Uplink statt, d.h. obwohl das Mobilteil die Sendeleistung im Uplink regelt, sendet die Basisstation auf dem dem Mobilteil zugeordneten Downlinkkanal mit maximaler Sendeleistung weiter. Daher können durch die Verwendung der maximalen Sendeleistung im Downlink Störungen bei benachbarten Basisstationen angemeldeter Mobilstationen bewirkt werden.

In der US 5,564,080 A ist ein Verfahren zum Steuern der Sendeleistung des Downlink in einem Mobilfunksystem mit einer Basisstation und einer Mobilstation beschrieben. Die Mobilstation regelt ihre Sendeleistung aufgrund des ermittelten Zustandes des Downlink-Übertragungskanals. Die Regelung der Sendeleistung der Basisstation wird mittels Kontrollalgorithmen innerhalb der Basisstation vorgenommen.

Der Erfindung liegt daher die Aufgabe zugrunde, ein Verfahren und ein entsprechendes Mobilfunksystem zu schaffen, in denen die Sendeleistung auch der Basisstation an die Kanalbegebenheit angepaßt werden kann. Die Aufgabe wird durch die Merkmale der unabhängigen Ansprüche gelöst. Bevorzugte Ausgestaltungen der Erfindung sind Gegenstand der Unteransprüche.

Gemäß der Erfindung teilt bei einem Verfahren zum Steuern der Sendeleistung des Downlinks in einem Mobilfunksystem bestehend aus mindestens einer Basisstation und einer Mobilstation, die Mobilstation der Basisstation Information über den Zustand des Downlinkkanals mit, wodurch aufgrund dieser Information die Regelung der Sendeleistung des Downlinks der Basisstation vorgenommen wird. Vorzugsweise regelt die Mobilstation ihre Uplink-Sendeleistung aufgrund des ermittelten Zustands des Downlink-Übertragungskanals.

Ferner können zur Regelung der Sendeleistung des Downlinkkanals zusätzlich zur von der Mobilstation übermittelten Information über den Downlink die von der Basisstation ermittelten Kanalparameter des Uplinkkanals wie Ubertragungsqualität und/oder Empfangsfeldstärke zur Regelung der Sendeleistung des Downlinks verwendet werden.

Diese von der Mobilstation an die Basisstation gesendete Information kann verschiedene Inhalte haben. So kann die Mobilstation in einer Nachricht die Information über eine Reduzierung oder Erhöhung der Sendeleistung des Uplinks an die Basisstation senden.

Im einfachsten Fall wird die Information über die Änderung der Sendeleistung des Uplinks durch ein Statusbit übertragen. Das Statusbit kann dann die Information "Sendeleistungs-Reduktion" oder "Sendeleistungserhöhung" enthalten. Aufgrund der Information des Statusbits kann dann die Basisstation die Sendeleistung im Downlink um einen vorbestimmten Betrag erniedrigen oder erhöhen, wobei vorab festgelegt ist, um welchen Betrag erhöht oder erniedrigt wird. Dies kann ferner auch eine Funktion der aktuell abgestrahlten Sendeleistung sein, d.h. die Erhöhung oder Erniedrigung kann auch nichtlinear erfolgen.

Ferner kann die Information den Betrag der Sendeleistungs-Reduktion oder -erhöhung des Uplinks der Mobilstation enthalten, beispielsweise durch die relative Angabe, um wieviel db die Mobilstation ihre Sendeleistung geändert hat. Diese Angabe wird in einer Ausführungsform direkt als der Betrag verwendet, um den die Sendeleistung des Downlinks der Basisstation reduziert oder erhöht wird.

Ferner kann die Sendeleistung des Downlinks der Basisstation um einen Betrag reduziert oder erhöht wird, der eine Funktion des empfangenen Betrags der Sendeleistungs-Änderung des Uplinks ist, beispielsweise um einen mit einer Korrektur versehenen Betrag.

Vorzugsweise teilt eine Administration den Basisstationen mit oder gibt ihnen vor, ob die Reduktion der Sendeleistung im Downlink bei Empfang der Information (Nachricht) durchgeführt werden kann. Ferner gibt die Administration vor, auf welchen Frequenzen und auf welchen Zeitschlitzen eine Sendeleistungs-Reduktion im Downlink durchgeführt werden kann. Dies kann von einem Basisstations-Controller des Mobilfunksystems wahrgenommen werden, der der mindestens einen Basisstation vorgibt, ob eine Anpassung der Sendeleistung des Downlinks vorgenommen werden kann oder nicht, und gegebenenfalls auf welchen Frequenzen und in welchen Zeitschlitzen.

Ein Mobilfunksystem, das das erfindungsgemäße Verfahren verwendet, umfaßt mindestens einer Basisstation und mindestens eine Mobilfunkeinheit. Ferner ist ein Basisstations-Controller vorhanden, wobei bei einfachen Systemen, wie einfachen DECT-Systemen, die Basisstation gleichzeitig als Controller dient. Verwendung kann das Verfahren beispielsweise bei DECT-Systemen, Mobilfunksystemen nach GSM oder Mobilfunksysteme der dritten Generation finden. Durch die Anpassung der Sendeleistung im Downlink werden Störungen durch die Basisstation bzw. Basisstationen zusätzlich verringert.

## Patentansprüche

1. Verfahren zum Steuern der Sendeleistung des Downlinkkanals in einem Mobilfunksystem bestehend aus mindestens einer Basisstation und einer Mobilstation,
**dadurch gekennzeichnet,**
- **daß** die Mobilstation ihre Sendeleistung aufgrund des ermittelten Zustands des Downlink-Übertragungskanals regelt, - daß die Mobilstation der Basisstation eine Information über eine Änderung der Sendeleistung der Mobilstation übermittelt
- und **daß** aufgrund dieser Information die Regelung der Sendeleistung der Basisstation vorgenommen wird.

2. Verfahren nach Anspruch 1, **dadurch gekennzeichnet , daß** die Basisstation ihre Sendeleistung ferner aufgrund der Kanalparameter des Uplinks regelt.

3. Verfahren nach Anspruch 1 oder 2, **dadurch gekennzeichnet, daß** die Information über die Änderung der Sendeleistung der Mobilstation durch ein Statusbit übertragen wird.

4. Verfahren nach Anspruch 3, **dadurch gekennzeichnet , daß** das Statusbit die Information "Sendeleistungs-Reduktion" oder "Sendeleistungserhöhung" enthält.

5. Verfahren nach Anspruch 4, dadurch gekennzeichn e t, daß die Sendeleistung der Basisstation entsprechend der Information des Statusbits um einen vorbestimmten Betrag erniedrigt oder erhöht wird.

6. Verfahren nach Anspruch 1 oder 2, **dadurch gekennzeichnet, daß** die Information den Betrag der Sendeleistungs-Reduktion oder -erhöhung der Mobilstation enthält.

7. Verfahren nach Anspruch 6, **dadurch gekennzeichnet , daß** die Sendeleistung der Basisstation um den Betrag der Sendeleistungs-Reduktion oder -erhöhung der Mobilstation reduziert oder erhöht wird.

8. Verfahren nach Anspruch 6, **dadurch gekennzeichnet , daß** die Sendeleistung der Basisstation um einen Betrag reduziert oder erhöht wird, der eine Funktion des Betrags der Sendeleistungs-Reduktion oder -erhöhung der Mobilstation ist.

9. Verfahren nach einem der vorangegangenen Ansprüche, **dadurch gekennzeichnet , daß** ein Basisstations-Controller festlegt, ob eine Anpassung der Sendeleistung der Basisstation vorgenommen werden kann.

10. Verfahren nach Anspruch 9, **dadurch gekennzeichnet, daß** der Basisstations-Controller vorgibt, auf welchen Frequenzen und in welchen Zeitschlitzen eine Sendeleistungsanpassung durchgeführt werden kann.

11. Mobilfunksystem mit mindestens einer Basisstation und einer Mobilstation
- dessen Mobilstation eine Einheit zur Steuerung ihrer Sendeleistung aufgrund des ermittelten Zustands des Downlink-Übertragungskanals aufweist,
- dessen Mobilstation eine Einheit zur Übermittlung einer Information über eine Änderung der Sendeleistung der Mobilstation an die Basisstation aufweist,
- und dessen Basisstation eine Einheit zur Regelung der Sendeleistung der Basisstation aufgrund dieser Information aufweist.

## Claims

1. Method for controlling the transmitting power of the downlink channel in a mobile radio system comprising of at least one base station and one mobile station, **characterized in that**
- the mobile station controls its transmitting power on the basis of the state found in the downlink transmission channel,
- the mobile station transmits information about a change in the transmitting power of the mobile station to the base station
- and the transmitting power of the base station is controlled on the basis of this information.

2. Method according to Claim 1, **characterized in that** the base station also controls its transmitting power on the basis of the channel parameters of the uplink.

3. Method according to Claim 1 or 2, **characterized in that** the information about the change in the transmitting power of the mobile station is transmitted by a status bit.

4. Method according to Claim 3, **characterized in that** the status bit contains the information "transmitting power reduction" or "transmitting power increase".

5. Method according to Claim 4, **characterized in that** the transmitting power of the base station is decreased or increased by a predetermined amount corresponding to the information of the status bit.

6. Method according to Claim 1 or 2, **characterized in that** the information contains the amount of the transmitting power reduction or increase of the mobile station.

7. Method according to Claim 6, **characterized in that** the transmitting power of the base station is reduced or increased by the magnitude of the transmitting power reduction or increase of the mobile station.

8. Method according to Claim 6, **characterized in that** the transmitting power of the base station is reduced or increased by an amount which is a function of the magnitude of the transmitting power reduction or increase of the mobile station.

9. Method according to one of the preceding claims, **characterized in that** a base station controller determines whether the transmitting power of the base station can be adapted.

10. Method according to Claim 9, **characterized in that** the base station controller provides instructions about the frequencies at which and the time slots in which transmitting power adaptation can be performed.

11. Mobile radio system comprising at least one base station and one mobile station
- whose mobile station has a unit for controlling its transmitting power on the basis of the state found in the downlink transmission channel,
- whose mobile station has a unit for transmitting information about a change in the transmitting power of the mobile station to the base station,
- and the base station of which has a unit for controlling the transmitting power of the base station on the basis of this information.

## Revendications

1. Procédé pour le contrôle de la puissance d'émission du canal de la liaison descendante dans un système radiomobile constitué d'au moins un poste de base et un poste mobile,
**caractérisé**
- **en ce que** le poste mobile règle sa puissance d'émission en fonction de l'état établi du canal de transmission de la liaison descendante, - en ce que le poste mobile transmet au poste de base une information concernant une modification de la puissance d'émission du poste mobile,
- et **en ce que** le réglage de la puissance d'émission du poste de base a lieu sur la base de cette information.

2. Procédé selon la revendication 1, **caractérisé en ce que** le poste de base règle par ailleurs sa puissance d'émission sur la base des paramètres de canaux.

3. Procédé selon la revendication 1 ou 2, **caractérisé en ce que** l'information concernant la modification de la puissance d'émission du poste mobile est transmise par un bit d'état.

4. Procédé selon la revendication 3, **caractérisé en ce que** le bit d'état contient l'information « réduction de la puissance d'émission » ou « augmentation de la puissance d'émission ».

5. Procédé selon la revendication 4, **caractérisé en ce que** la puissance d'émission du poste de base est abaissée ou augmentée d'un montant prédéfini, en fonction de l'information du bit d'état.

6. Procédé selon la revendication 1 ou 2, **caractérisé en ce que** l'information contient le montant de la réduction ou de l'augmentation de la puissance d'émission du poste mobile.

7. Procédé selon la revendication 6, **caractérisé en ce que** la puissance d'émission du poste de base est réduite ou augmentée du montant de la réduction ou de l'augmentation de la puissance d'émission du poste mobile.

8. Procédé selon la revendication 6, **caractérisé en ce que** la puissance d'émission du poste de base est réduite ou augmentée d'un montant qui est une fonction du montant de la réduction ou de l'augmentation de la puissance d'émission du poste mobile.

9. Procédé selon l'une quelconque des revendications précédentes, **caractérisé en ce qu'**un contrôleur du poste de base détermine s'il faut procéder à une adaptation de la puissance d'émission du poste de base.

10. Procédé selon la revendication 9, **caractérisé en ce que** le contrôleur du poste de base prescrit sur quelles fréquences et dans quels créneaux temporels une adaptation de la puissance d'émission peut être réalisée.

11. Système radiomobile avec au moins un poste de base et un poste mobile
- dont le poste mobile présente une unité pour le contrôle de sa puissance d'émission, sur la base de l'état déterminé pour le canal de transmission de la liaison descendante,
- dont le poste mobile présente une unité pour la transmission au poste de base d'une information concernant une modification de la puissance d'émission du poste mobile,
- et dont le poste de base présente une unité pour le réglage de la puissance d'émission du poste de base sur base de cette information.
